# EUROPÄISCHE PATENTANMELDUNG

(11) **EP 2 169 224 A2**
(43) Veröffentlichungstag der Anmeldung: **31.03.2010**
(21) Anmeldenummer: 09171567.2
(22) Anmeldetag: 29.09.2009
(51) Int. Cl.: F03D 11/02

(54) **Verfahren zum Überwachen einer Triebstrangkomponente einer Windenergieanlage**

(30) Priorität: 29.09.2008 DE 102008049530
(71) Anmelder: PRÜFTECHNIK Dieter Busch AG, 85737 Ismaning (DE)
(72) Erfinder: Becker, Edwin, Dr., 48734, Reken (DE)

(57) **Zusammenfassung**

Die Erfindung betrifft ein Verfahren zum Überwachen einer Tnebstrangkomponente (22) einer Windenergieanlage (10) mit einem Rotor (12), wobei die Rotordrehzahl erfasst wird, die Windenergieanlage so gesteuert wird, dass sich die Rotordrehzahl während einer Hochlaufphase erhöht, während der Hochlaufphase mittels mindestens eines an der Triebstrangkomponente angebrachten Schwingungssensors (30) Schwingungssignale erfasst werden, um Schwingungsspektren bei unterschiedlichen Rotordrehzahlen zu erfassen, und bei unterschiedlichen Rotordrehzahlen erfasste Schwingungsspektren als Überlagerungsspektrum dargestellt werden, um den Zustand der Triebstrangkonponente zu bewerten.

## Beschreibung

Die vorliegende Erfindung betrifft ein Verfahren zum Überwachen einer Triebstrangkomponente einer Windenergieanlage.

Allgemein ist es eine bekannte Vorgehensweise im Maschinenbau, zur Systemdiagnose sogenannte Auslaufkurven aufzunehmen, wobei ein Schwingungssensor an einer geeigneten Stelle des Systems angebracht wird und die Maschine hochgefahren wird, bis die Solldrehzahl überschritten ist. Von dieser etwas über der Solldrehzahl liegenden Drehzahl wird die Drehzahl dann auf den Sollwert reduziert, wobei während dieser sogenannten Auslaufphase, während welcher sich die Drehzahl verringert, ein Schwingungsspektrum aufgenommen wird. Ebenso ist es möglich, für die Auslaufphase die Maschine aus dem Solbetrieb in den Stillstand laufen zu lassen.

Bei Windenergieanlagen hat sich nun gezeigt, dass es zur Diagnose nicht besonders hilfreich ist, solche Auslaufkurven aufzunehmen. So ist es zunächst nicht ohne weiteres möglich, eine über der Nenndrehzahl liegende Drehzahl überhaupt einzustellen, da die maximale Drehzahl im Wesentlichen vom Wind vorgegeben ist. Ferner sind die Auslaufphasen bei Windenergieanlagen typischerweise recht kurz, d.h. die Anlage kommt relativ rasch zum Stillstand, während die Vorgänge im Antriebsstrang von Windenergieanlagen in der Regel lange Messzeiten erfordern. Aus diesen Gründen beschränkte man sich bisher bei Windenergieanlagen auf Messungen im Betriebszustand, d.h. bei Nenndrehzahl des Rotors. Ein Beispiel für eine solche Praxis ist in der DE 10 2005 017 054 A1 zu finden, wo Körperschallmessungen an den Rotorblättern einer Windenergieaniage im Betrieb, d.h. bei gleichbleibender Drehzahl, vorgenommen werden, um mittels spektraler Analyse den Zustand der Rotorblätter zu überwachen. Besonders problematisch ist bei Messungen im Betriebszustand, dass Messwerte oft verworfen werden müssen, da sich die Windverhältnisse während der erforderlichen langen Messzeit ändern und so nicht von hinreichend konstanten Bedingungen für eine aussagekräftige Messung auszugehen ist.

Die DE 198 41 947 A1 beschreibt allgemein ein Verfahren zum Messen von Körperschall für die technische Diagnostik, wobei Schwingungsresonanzen mittels Durchfahren von definierten Drehzahlbereichen, insbesondere bei Anlaufvorgängen, erfasst werden. Dabei wird die Signalauswertung im Zeitbereich vorgenommen.

Auch die DE 24 56 593 A1 erwähnt, dass Schwingungsresonanzen beim Hochlaufen einer rotierenden Komponente auf die volle Drehzahl bestimmt werden können, wobei keine spezielle Anwendung dieses Verfahrens angegeben ist. Zur Bestimmung der Schwingungsresonanzen wird die Gesamtamplitude, d.h. die über alle Frequenzen integrierte Amplitude, ausgewertet.

Es ist Aufgabe der vorliegenden Erfindung, ein Verfahren zum Überwachen einer Triebstrangkomponente einer Windenergieanlage zu schaffen, wobei auf einfache Weise eine aussageluäftige Bewertung ermöglicht werden soll.

Diese Aufgabe wird erfindungsgemäß gelöst durch ein Verfahren gemäß Anspruch 1.

Bei der erfindungsgemäßen Lösung ist vorteilhaft, dass dadurch, dass mittels während der Hochlaufphase erfassten Schwingungssignalen Schwingungsspektren bei unterschiedlichen Rotordrehzahlen etfasst und als Überlagerungsspektrum dargestellt werden, im Vergleich zu herkömmlichen Schwingungsmessungen, die ausschließlich bei der Nenndrehzahl des Rotors der Windenergieanlage erfolgen, eine wesentlich aussagekräftigere Diagnostik ermöglicht wird, die dennoch, insbesondere im Vergleich zur Darstellung mittels Campbell-Diagrammen, Bode-Diagrammen, Wasserfallspektren oder ähnlichem, relativ wenig datenintensiv ist. Bevorzugte Ausgestaltungen der Erfindung ergeben sich aus den Unteransprüchen.

Mit der Darstellung der Schwingungsdaten als Überlagerungsspektrum ist gemeint, dass sich im Überlagerungsspektrum der Amplitudenwert für jede Frequenz durch eine bestimmte mathernatische Operation aus den Amplitudenwerten der einzelnen Spektren für diese Frequenz ergeben. Wenn also beispielsweise bei 20 verschiedenen Drehzahlen aufgenommene Spektren zum Überlagerungsspektrum betragen, ergibt sich der Amplitudenwert bei beispielsweise 100 Hz im Überlagerungsspektrum als eine bestimmte Funktion der 20 Amplitudenwerte der Einzelspektren bei 100 Hz.

Diese Funktion kann beispielsweise eine Summenbildung sein, so dass sich das Überlagerungsspektrum dann als Summe der Einzelspektren ergeben würde. Während die Auswertung solcher Summenspektren in manchen Fällen zweckmäßig sein kann, wird das Überlagerungsspektrum jedoch vorzugsweise durch eine "Projektion" der Einzelspektren gebildet, d.h. der Amplitudenwert im Überlagerungsspektrum ergibt sich für jede Frequenz als der jeweils größte Amplitudenwert, den eines der Einzelspektren bei dieser Frequenz zeigt. Mit anderen Worten, die mathematische Funktion besteht dann in der Bildung des Maximums für jede Frequenz.

Somit enthält ein aus *n* Einzelspektren gebildetes Überlagerungsspektrum nur etwa *1*/*n* der Datenmenge der Einzelspektren. Es hat sich nun gezeigt, dass bei Hochlaufmessungen an Triebstrangkomponenten von Windenergieanlagen trotz dieser erheblichen Verringerung der Datenmenge relevante Diagnoseaussagen möglich sind.

Falls mehrere Schwingungssensoren verwendet werden, kann entweder aus den aus den Messwerten eines Sensors gewonnenen Einzelspektren für jeden Sensor separat ein Überlagerungsspektrum gebildet werden, oder es können in einem Überlagerungsspektrum auch aus den aus Messwerten unterschiedlicher Sensoren gewonnene Einzelspektren berücksichtigt werden. In letzterem Fall können dann im Überlagerungsspektrum für eine bestimmte Drehzahl gleich mehrere Einzelspektren, nämlich von unterschiedlichen Sensoren stammende, berücksichtigt werden.

Im folgenden wird die Erfindung beispielhaft anhand der beigefügten Zeichnungen näher erläutert. Dabei zeigt die einzige Figur ine schematische Ansicht einer Windenergieanlage mit einer Vorrichtung zum Durchführen des erfindungseemäßen Überwachungsverfahrens.

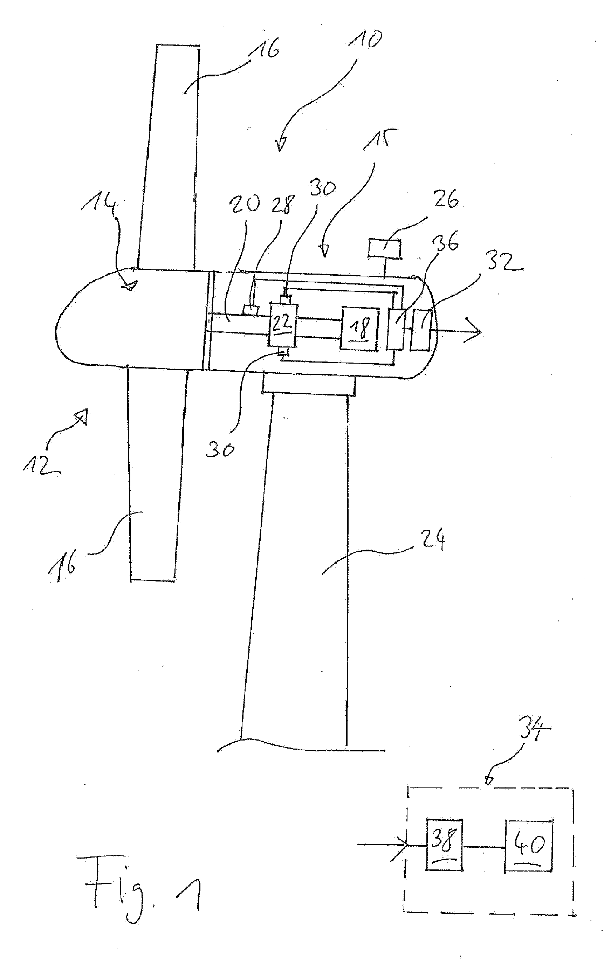

In der einzigen Figur ist ein Beispiel einer Windenergieanlage 10 gezeigt. Dabei ist ein Rotor 12 mit einer Nabe 14 für drei Rotorblätter 16 (davon sind in Fig. 1 nur 2 gezeigt) vorgesehen. Der Rotor 12 ist in horizontaler Ausrichtung in einer Gondel 15 gelagert, die einen Generator 18 beherbergt, der von der Rotorwelle 20 über ein Getriebe 22 angetrieben wird. Die Gondel 15 ist um eine vertikale Achse drehbar auf einem Turm 24 gelagert und weist ferner einen Sensor 26 für die Windgeschwindigkeit und die Windrichtung auf. Außerdem ist ein Sensor 28 für die Erfassung der Drehzahl des Rotors 12 vorgesehen. Die Rotorblätter 16 sind jeweils mittels einer (nicht gezeigten) Blattverstellung um ihre Längsachse bezüglich der Nabe 14 verstellbar, um in üblicher Weise eine Pitchverstellung der Rotorblätter 16 zu realisieren.

An dem Getriebe 22 sind mehrere Schwingungssensoren 30 angebracht. Diese Schwingungssensoren 30 können beispielsweise axial oder radial angebracht sein, am Planetengetriebe, am Hauptlager oder am Lager der Abtriebswelle zum Generator 18. Die Signale des Drehzahlsensors 28 und die Signale der Schwingungssensoren 30 werden zu einer Datentransfereinriehtung 32 geleitet, welche vorgesehen ist, um die Daten zu einer entfernt von der Windenergieanlage 10 angeordneten Diagnosestelle 34 zu transferieren, wobei der Datentransfer vorzugsweise per Internat erfolgt. Der Datentransfer kann dabei aktiv von der Diagnosestelle 34 angefordert werden, oder er erfolgt automatisch in gewissen Abständen per E-Mail. Zweckmäßigerweise ist der Datentransfereinrichtung 32 eine Datenverarbeitungseinheit 36 vorgeschaltet, die bereits eine gewisse Vorverarbeitung der gesammelten Daten vornimmt.

Die Diagnosestelle 34 umfasst eine Datenverarbeitungseinheit 38 zum Aufbereiten der empfangenen Daten sowie eine Anzeigeeinrichtung 40 zum Darstellen der aufbereiteten Daten.

Bei anderen Ausfuhrungsformen der Erfindung kann jedoch von einer online-Datentübertragung abgesehen werden, so dass die Auswertung der Schwingungsmessungen dann ausschließlich vor Ort stattfindet.

Während einer Hochlaufphase, während welcher die Windenergieanlage 10 so gesteuert wird, dass sich die Drehzahl des Rotors 12 erhöht, werden mittels der Schwingungssensoren 30 Schwingungssignale erfasst, um Schwingungsspektren bei unterschiedlichen Rotordrehzahlen zu erfassen, wobei solche bei unterschiedlichen Rotordrehzahlen erfasste Schwingungsspektren als Überlagerungsspektrum, z.B. als Summenspektrum oder, in der Regel stärker bevorzugt, als Projektion bzgl. der Drehzahlachse (man nimmt für jeden Frequenz den jeweils höchsten Amplitudenwert aus allen Einzelspektren), dargestellt werden, um den Zustand des Getriebes 22 zu Diagnosezwecken zu bewerten. Üblicherweise erfolgt das Hochfahren des Rotors 12 dadurch, dass der Rotor 12 durch Drehung um die vertikale Achse mehr in den Wind gedreht wird und/oder der Pitch-Winkel der Rotorblätter 16 entsprechend geändert wird.

Da im Normalbetrieb ohnehin öfter ein Hochfahren des Rotors 12 erfolgt, ist in der Regel kein separates Hochfahren des Rotors 12 zu Diagnosezwecken erforderlich; vielmehr kann auf die während eines im normalen Betrieb erforderlichen Hochfahrens des Rotors 12 anfallenden Schwingungsdaten zurückgegriffen werden. So können beispielsweise alle im Nonnalbetrieb der Windenergieanlage 10 erfassten Schwingungsdaten an die Diagnosestelle 34 übertragen werden, wo dann zur Bewertung des Zustands des Getriebes 22 für die Überlagerungsspektren nur solche Schwingungsdaten herangezogen werden, die in einer Hochlaufphase erfasst wurden.

Zweckmäßigerweise wird für jeden der Schwingungssensoren 30 ein separates Überlagerungsspektrum zur Diagnose erstellt. Vorzugsweise werden dann die Überlagerungsspektren, die jeweils aus einem der Schwingungssensoren 30 resultieren, zur Bewertung des Zustands des Getriebes 22 gemeinsam dargestellt.

Es hat sich herausgestellt, dass bei der Schwingungsmessung an Antriebsstrangkomponenten von Windenergieanlagen während Hochlaufphasen bereits in der Darstellung als Überlagerungsspektrum Merkmale erkannt werden können, die für die Zustandsüberwachung wichtig sind. Solche Merkmale sind z.B. Resonanzfrequenzen der Komponenten des Antriebsstrangs sowie Zahneingriffsfrequenzen des Getriebes, insbesondere die Zahneingriffsfrequenzen der langsamen und der schnellen Stimaradstufe. Eine Ausweitung der Spektren kann beispielsweise im Bereich von 0 bis 2000 Hz, aber auch zusätzlich im Bereich von 0 bis 100 Hz erfolgen, da es auch wichtig ist, den Bereich sehr niedriger Frequenzen, z.B. im Bereich einiger Hz, genau zu betrachten, wofür lange Messzeiten nötig sind. Gerade dort im niederfrequenten Bereich erkennt man für das jeweilige Getriebe charakteristische Resonanzfrequenzen. Im hochfrequenten Bereich wird dagegen der Strukturschall sichtbar, z.B. die Zahnfrequenzen.

Auf diese Weise lassen sich nicht nur Verschleißerscheinungen bei bereits länger im Betrieb befindlichen Getrieben erkennen, sondern auch bei neuen Getrieben Konstruktionsfehler erkennen. Ein solcher Konstruktionsfehler kann es sein, wenn durch die Wahl einer bestimmten Anzahl Zähne an einem Zahnrad Resonanzfrequenzen des Getriebes, des Getriebegehäuses oder der gesamten Struktur des Antriebsstrangs angeregt werden.

Vorzugsweise werden die Signale der Sensoren 30 während der Hochlaufphase permanent erfasst, um Schwingungsdaten aus einem möglichst breiten Drehzahlbereich zu erfassen, wobei sich die Hochlaufphase vom Beginn der Rotation des Rotors 12 aus dem Stillstand bis zum Erreichen der Rotomenndrebzahl für die herrschende Windstärke erstrecken kann.

Zweckmäßigerweise werden die Überlagerungsspektren zur Diagnose logarithmisch dargestellt.

Zusätzlich zur Auswertung der Überlagerungsspektren kann zumindest gelegentlich auch eine Analyse der einzelnen Spektren in einer dreidimensionalen Darstellung (mit der RotorDrehzahl, bei der das jeweilige Einzelspektrum aufgenommen wurde, als dritter Dimension) erfolgen, um die Signifikanz der Auswertung der Überlagerungsspektren zu überprüfen bzw. zu überwachen.

Zusätzlich zu der beschriebenen Analyse im Frequenzbereich kann eine Auswertung der Signale der Schwingungssensoren 30 auch im Zeitbereich erfolgen, wobei auch hier die während der Hochlaufphase erfassten Signale herangezogen werden. Zweckmäßigerweise werden die Sensorsignale dabei vor der Auswertung mittels eines geeigneten Bandpasses hinsichtlich der Rotordrehzahl (erste Ordnung), einem Vielfachen der Rotordrehzahl (höhere Ordnung) oder einer charakteristischen Frequenz der zu messenden Triebstrangkomponente (beim Getriebe z.B. Zahnfrequenz der langsamen Stimradstufe oder Zahnfrequenz der schnellen Stimradstufe) gefiltert. Vorzugsweise handelt es sich bei den im Zeitbereich ausgewerteten Signalen um die erfasste Schwinggeschwindigkeit.

Während die Erfindung bisher anhand der Diagnose des Getriebes veranschaulicht wurde, versteht es sich, dass die Erfindung auch für die überwachung anderer Triehstrangkomponenten geeignet ist.

Vorzugsweise werden die erfassten Schwingungsdaten bereits in vorverarbeiteter Form an die Diagnosestelle 34 übertragen, wobei beispielsweise in diesem Fall die Transformation in den Frequenzbereich, gfs. die Bildung der Überlagerungsspektren und die Filterung der Zeitsignale mit der Drehzahl usw. bereits von der Datenverarbeitungseinheit 36 in der Gondel 15 vorgenommen werden kann. Die Datenverarbeitungsarbeit 36 kann so ausgebildet sein, dass sie eine Übertragung der Schwingungsdaten an die Diagnosestelle 34 nur dann vornimmt, wenn sich über die Zeit Veränderungen in den von der Datenverarbeitungseinheit 36 erfassten und ausgewerteten Überlagerungsspektren ergeben.

## Patentansprüche

1. Verfahren zum Überwachen einer Triebstrangkomponente (22) einer Windenergieanlage (10) mit einem Rotor (12), wobei
die Rotordrehzahl erfasst wird,
die Windenergieanlage so gesteuert wird, dass sich die Rotordrehzahl während einer Hochlaufphase erhöht,
während der Hochlaufphase mittels mindestens eines an der Triebstrangkomponente angebrachten Schwingungssensors (30) Schwingungssignale erfasst werden, um Schwingungsspektren bei unterschiedlichen Rotordrehzahlen zu erfassen, und
bei unterschiedlichen Rotordrehzahlen erfasste Schwingungsspektren als Überlagerungsspektrum dargestellt werden, um den Zustand der Triebstrangkomponente zu bewerten.

2. Verfahren nach Anspruch 1, **dadurch gekennzeichnet, dass** die erfassten Schwingungsdaten online zu einer von der Windenergieanlage (10) entfernten Diagnosestelle (34) übertragen werden, um den Zustand der Triebstrangkomponente (22) zu bewerten.

3. Verfahren nach Anspruch 2, **dadurch gekennzeichnet, dass** die Übertragung per Internet erfolgt, wobei vor der Übertragung eine Vorverarbeitung der Daten erfolgt, einschließlich Transformation in den Frequenzraum.

4. Verfahren nach Anspruch 2 oder 3, **dadurch gekennzeichnet, dass** im Normalbetrieb der Windenergieanlage (10) erfasste Schwingungsdaten an die Diagnosestelle (34) übertragen werden, wobei zur Bewertung des Zustands der Triebstrangkomponente (22) mittels Überlagerungsspektrum nur solche Schwingungsdaten herangezogen werden, die in einer Hochlaufphase erfasst wurden.

5. Verfahren nach einem der vorhergehenden Ansprüche, **dadurch gekennzeichnet, dass** mehrere an verschiedenen Messpunkten an der Triebstrangkomponente angebrachte Schwingungssensoren (30) vorgesehen sind.

6. Verfahren nach Anspruch 5, **dadurch gekennzeichnet, dass** für jeden Schwingungssensor (30) ein separates Überlagerungsspektrum erstellt wird.

7. Verfahren nach Anspruch 6, **dadurch gekennzeichnet, dass** die Überlagerungsspektren von verschiedenen Schwingungssensoren (30) zur Bewertung des Zustands der Ttiebstrangkomponente (22) gemeinsam dargestellt werden.

8. Verfahren nach Anspruch 5, **dadurch gekennzeichnet, dass** ein gemeinsames Überlagerungsspektrum mit Daten von mehreren der Schwingungssensoren (30) erstellt wird

9. Verfahren nach einem der vorhergehenden Ansprüche, **dadurch gekennzeichnet, dass** sich der Amplitudenwert im Überlagerungsspektrum für jede Frequenz als der jeweils größte Amplitudenwert ergibt, den eines der beitragenden einzelnen Schwingungsspektren bei dieser Frequenz zeigt.

10. Verfahren nach einem der vorhergehenden Ansprüche, **dadurch gekennzeichnet, dass** Schwingungsspektren im Bereich von 0 bis 2000 Hz aufgenommen werden, um in Form von Überlagerungsspektren ausgewertet zu werden.

11. Verfahren nach Anspruch 10, **dadurch gekennzeichnet, dass** Schwingungsspektren im Bereich von 0 bis 100 Hz aufgenommen werden, um in Form von Überlagerungsspektren ausgewertet zu werden.

12. Verfahren nach einem der vorhergehenden Ansprüche, **dadurch gekennzeichnet, dass** bei der Bewertung des Zustands der Triebstrangkomponente (22) auch während der Hochlaufphase im Zeitbereich erfasste Sensorsignale herangezogen werden.

13. Verfahren nach Anspruch 12, **dadurch gekennzeichnet, dass** die im Zeitbereich erfassten Sensorsignale vor der Auswertung mittels Bandpass hinsichtlich der Rotordrehzahl, einem Vielfachen der Rotordrehzahl oder einer charakteristischen Frequenz der Triebstrangkomponente (22) gefiltert werden.

14. Verfahren nach Anspruch 12 oder 13, **dadurch gekennzeichnet, dass** es sich bei den im Zeitbereich erfassten Sensorsignalen um die Schwinggeschwindigkeit handelt.

15. Verfahren nach einem der vorhergehenden Ansprüche, **dadurch gekennzeichnet, dass** in der Hochlaufphase für Rotordrehzahlen vom Beginn der Rotation des Rotors (12) bis zum Erreichen der Rotor-Nenndrebzahl Schwingungsspektren erfasst werden.

16. Verfahren nach einem der vorhergehenden Ansprüche, **dadurch gekennzeichnet, dass** die Sensorsignale während der Hochlaufphase permanent erfasst werden.

17. Verfahren nach einem der vorhergehenden Ansprüche, **dadurch gekennzeichnet, dass** es sich bei der Triebstrangkomponente um ein Getriebe (22) handelt.
